# EUROPÄISCHE PATENTSCHRIFT

(11) **EP 0 749 676 B1**
(45) Veröffentlichungstag und Bekanntmachung des Hinweises auf die Patenterteilung: **10.10.2001**
(21) Anmeldenummer: 96106489.6
(22) Anmeldetag: 25.04.1996
(51) Int. Cl.: A01B 33/02

(54) **Vorrichting zur Bearbeitung von Böden**
Soil working device
Dispositif pour le travail du sol

(30) Priorität: 21.06.1995 DE 19522005
(43) Veröffentlichungstag der Anmeldung: 27.12.1996
(73) Patentinhaber: Rheinmetall Landsysteme GmbH, 24159 Kiel (DE)
(72) Erfinder: Steiner, Wolfgang, D-53547 Breitscheid (DE)
(74) Vertreter: Hansmann, Dierk, Dipl.-Ing.

(56) Entgegenhaltungen:
- DE-A- 3 217 340
- DE-U- 8 812 484
- FR-A- 2 448 841
- GB-A- 265 783
- GB-A- 2 018 553
- US-A- 1 397 428
- US-A- 1 437 763
- US-A- 2 455 148

## Beschreibung

Die Erfindung betrifft eine Vorrichtung zur Bearbeitung von Böden mit einem Trägerfahrzeug, insbesondere Raupenschlepper, mit zwei parallel zueinander angeordneten Schubarmen, die mit einem Ende am Trägerfahrzeug um eine quer zu dessen Längsachse verlaufende Querachse zur Höhenverstellung verschwenkbar angebracht sind und die eine Fräswalze tragen, welche zwischen den freien Enden der Schubarme vor dem Trägerfahrzeug angebracht ist und beim Arbeitseinsatz mit einer Drehrichtung antreibbar ist, die der Abwälzrichtung der Laufelemente, auf denen das Trägerfahrzeug bewegbar ist, entgegengerichtet ist, wobei Fräswerkzeuge entlang der Längsachse (Drehachse) und auf dem Umfang der Fräswalze verteilt angeordnet sind und diese mittels eines auf die Schubarme einwirkenden Stellantriebes zum Eingriff in den zu bearbeitenden Boden überführbar oder aus diesem aushebbar sind.

Eine solche Vorrichtung ist in der DE 88 12 484 U1 beschrieben. Dabei ist ein Gehäuse vorgesehen, das die Fräswalze zumindest teilweise umschließt und das eine Anlaufkante aufweist, durch welche das von der Fräswalze aus dem Boden aufgenommene und nach oben geförderte Bodenmaterial zumindest teilweise zurückgehalten wird. Durch diese Engstelle an der Unterkante der festen Vorderwand des Gehäuses, die eine Reihe von Zähnen, Noppen oder Widerlagern aufweist, die mit den Fräswerkzeugen der Fräswalze auf Lücke stehen, wird groberes Material gebrochen. Eine solche Vorrichtung ist vorzugsweise zur Bearbeitung von Waldböden nach dem Schlagen der Bäume gedacht. Die Behandlung des Bodens mit einer solchen Vorrichtung soll dafür sorgen, daß eine schnelle Wiederaufforstung möglich ist, weil im Boden befindliches Wurzelwerk oder dergleichen Holzmaterial so zerkleinert wird, daß eine schnelle Verrottung nach dem wiederablegen in die Fräsfurche eintritt.

Nach der DE-43 21 556 C2 ist es ferner bekannt, spezielle Mischorgane vorzusehen, die mit Organen zur Bodenlockung an eine gemeinsame Walze befestigt sind.

Hierdurch ist es nicht möglich, eine Anpassung an die vorliegenden Verhältnisse, wie einen Drehrichtungswechsel, vorzusehen.

Nach der GB 2 018 553 A wird ebenfalls eine gattungsgemäße Vorrichtung zur Bearbeitung von Böden mit einer Fräswalze und oberhalb dazu angeordneter Mischwalze mit eingreifenden Mischarmen vorgeschlagen.

Der Erfindung liegt die Aufgabe zugrunde, eine Vorrichtung zum Bearbeiten von Böden vorzuschlagen, mit der verfestigte Böden in verbesserter Weise aufgelockert und wobei erforderlichenfalls den Böden darüber hinaus andere Stoffe zugemischt werden können. Solche Stoffe können Nährstoffe, zum Beispiel Torf, enthalten, und zur Reaktivierung ineffektiver Böden dienen. Als Zumischstoff kann auch Kalk in Frage kommen, um saure Böden durch Kalkung für große Bodentiefen wirksam behandeln zu können.

Diese Aufgabe wird erfindungsgemäß dadurch gelöst, daß der Fräswalze eine Mischwalze zugeordnet ist, daß die Drehachse der Mischwalze parallel zur Drehachse der Fräswalze verläuft und oberhalb der Drehachse der Fräswalze angeordnet ist, daß die Mischwalze um ihre Drehachse umfangsverteilte Mischarme aufweist, die in die Lücken zwischen jeweils zwei an der Fräswalze angebrachte Fräswerkzeuqe entlang der Drehachse zwischen jeweils zwei an der Fräswalze angebrachte Werkzeuge eingreifen, und daß die Mischwalze in beide Drehrichtungen antreibbar ist.

Die Mischwalze wird dabei vorzugsweise mit einer Drehrichtung im Arbeitseinsatz angetrieben, die der Drehrichtung der Fräswalze entgegengerichtet ist. Es ist jedoch auch eine Umkehr dieser Drehrichtung möglich, um Verstopfungen rückgängig zu machen oder feines zuzugebendes Gut erst hinter der Fräswalze zuzumischen.

Bei der Bodenbearbeitung taucht die Fräswalze teilweise oder gänzlich und die Mischwalze zu einem wesentlichen Teil in den zu bearbeitenden Boden ein. Dabei wird das von den Fräswerkzeugen der Fräswalze abgefräste Bodenmaterial nach oben und in Richtung auf die Mischwalze gefördert. Das Bodenmaterial muß bei der bevorzugten Drehrichtung den Spalt, der zwischen den Fräswerkzeugen und den Mischarmen der Mischwalze gebildet ist, passieren, wobei es eine weitere Auflockerung erfährt. Sollen Zusatzstoffe zugemischt werden, so taucht die Fräswalze mit ihrem Rotationskreis in den Boden ein und das Zuschlagmaterial kann in Form einer Schicht auf dem Boden aufgebracht sein, welches von der Mischwalze aufgenommen wird, die sich im Bereich der Schichtstärke dieser Zuschlagstoffe im Einsatz befindet. Die Mischarme der Mischwalze nehmen diese Zuschlagstoffe auf und mischen sie unter das von der Fräswalze in Richtung zur Mischwalze geförderte Bodenmaterial. Es ist jedoch auch möglich, daß die Zuschlagstoffe von einem Bunker, der dem Trägerfahrzeug zugeordnet ist, der Mischwalze zur Untermischung in den von der Fräswalze nach oben geförderten Boden zugeleitet wird. Durch eine solche Bodenbearbeitung wird eine effektive Verbesserung der Bodenverhältnisse, sei es Lockerung und/oder Reaktivierung durch Zuschlagstoffe erzielt. Auch werden dabei die Bodenschichten so aufbereitet, daß eine innige und gleichmäßige Durchmischung des Bodens bis in die untersten, aufgefrästen Bereiche mit allen denkbaren Zuschlagstoffen, wie zum Beispiel Granulaten, Pulvern, Kalken, flüssigen und dickflüssigen Zusätzen, Substraten etc. möglich wird. Ebenso können kontaminierte Böden durch Einbringen von Neutralisatoren aufbereitet werden.

Ein weiterer Vorteil ist, daß die Deckschichten nicht abgetragen und einem Mischwerk zugeführt werden, dort mit Zusätzen vermischt und wieder zurückgebracht und verfüllt werden müssen. Durch die Vermischung vor Ort bleiben Klein- und Kleinstlebewesen weitgehend intakt und verbleiben in ihrer ursprünglichen Umgebung.

In Ausgestaltung der Erfindung ist vorgesehen, daß die Mischarme Bestandteil von sternartig ausgebildeten Scheiben sind. Diese Scheiben können dann auf Abstand zueinander angeordnet sein und so die Mischwalze bilden. Es ist jedoch auch möglich, daß die Mischwalze einen rohrförmigen Walzenkörper aufweist, auf dessen Umfang die Mischarme befestigt sind. Es ist ferner möglich, die Mischarme in verschiedenen Zuordnungen zu den Fräswerkzeugen der Fräswalze anzubringen. Nach einer ersten Ausführungsform greifen die Mischarme in die Längslücken zwischen den verteilt angeordneten Fräswerkzeugen der Fräswalze. Sie können aber auch so angeordnet sein, daß sie in die Umfangslücken zwischen jeweils zwei auf dem Umfang der Fräswalze angeordnete Fräswerkzeuge eingreifen. Schließlich ist es möglich, daß sie sowohl in die Längs- als auch die Umfangslücken eingreifen. Vorzugsweise ist jedoch ein Eingriff in die Längslücken vorgesehen. Für den Fall, daß ein Eingriff sowohl in Umfangs- als auch in die Längslücken vorgesehen ist, können die Mischarme sich über die gesamte Länge der Fräswalze erstrecken.

Vorzugsweise wird die Mischwalze schneller rotierend angetrieben als die Fräswalze. Insbesondere dann, wenn ein Eingriff der Mischarme auch in die Umfangslücken zwischen zwei Fräswerkzeugen vorgesehen ist, ist ein Übersetzungsverhältnis darzustellen, das die Anzahl der jeweiligen Umfangslücken zwischen den Mischarmen und Fräswerkzeugen berücksichtigt, damit eine Kollision der Mischarme und Fräswerkzeuge vermieden wird.

Um zu verhindern, daß von der Mischwalze bzw. deren Mischarme beaufschlagtes Material an den Mischarmen anhaften bleibt, ist der Mischwalze eine Kämmvorrichtung zugeordnet. Diese weist Zähne auf, die in die Längslücken zwischen jeweils zwei entlang der Drehachse angeordnete Mischarme eingreifen.

Gleiches gilt auch für die Fräswalze. Dieser ist ebenfalls eine Kämmvorrichtung zugeordnet, welche Zähne aufweist, die in die Längslücken zwischen jeweils zwei entlang der Drehachse angeordnete Fräswerkzeuge eingreift.

Vorzugsweise sind also die Fräswerkzeuge und die Mischarme so angeordnet, daß entlang der jeweiligen Drehachse mehrere Reihen entstehen, bei denen die Fräswerkzeuge bzw. Mischarme in jeweils gemeinsamen Radialebenen angeordnet sind, wobei jedoch die Radialebenen der Mischarme und die der Fräswerkzeuge zueinander versetzt sind, so daß die Mischarme jeweils in Lücken zwischen zwei Radialebenen der Fräswalze eintauchen, die Fräswerkzeuge enthalten. Um einen zielgerichteten Ausstoß des zu behandelnden Gutes zu erzielen, ist der der Fräswalze zugeordneten Kämmvorrichtung eine Leitvorrichtung zugehörig.

Eine besonders günstige Anordnung und auch Behandlung des Bodenmaterials ergibt sich, wenn entsprechend einem weiteren Vorschlag vorgesehen ist, daß die Fräswalze und die Mischwalze in einem zwischen den Schubarmen befestigten Gehäuse angeordnet sind, das den in Arbeitsbewegungsrichtung hinter sowie oberhalb der Mischwalze liegenden Bereich und bis auf einen hinter der Fräswalze befindlichen Auslaßabschnitt auch den sonstigen hinteren Bereich der Fräswalze abdeckt.

Damit kann das Gehäuse, welches die Fräswalze und die Mischwalze trägt, lösbar mit den Schubarmen verbunden werden, so daß das Trägerfahrzeug für verschiedene Zwecke ausgerüstet werden kann.

Um das zu bearbeitende Bodenmaterial zielgerichtet auf die Fräswalze zuzuleiten, weisen die Seitenwände des Gehäuses in Arbeitsbewegungsrichtung vorne liegende Leitschare auf.

Ein bevorzugtes Ausführungsbeispiel der Erfindung zur Bearbeitung eines Bodens ist in der Zeichnung schematisch dargestellt.

Es zeigt
- Figur 1: ein Trägerfahrzeug mit Schubarmen, an denen die erfindungsgemäße Vorrichtung zur Bearbeitung angebracht ist,
- Figur 2: einen Querschnitt durch eine erfindungsgemäße Vorrichtung bezüglich des Gehäuses und der von diesem aufgenommenen Fräs- und Mischwalze,
- Figur 3: einen Schnitt III-III gemäß Figur 2 und
- Figur 4: die Vorrichtung im Arbeitseinsatz, wobei eine auf dem Boden aufgetragene Zuschlagsstoffschicht in den Boden eingearbeitet wird.

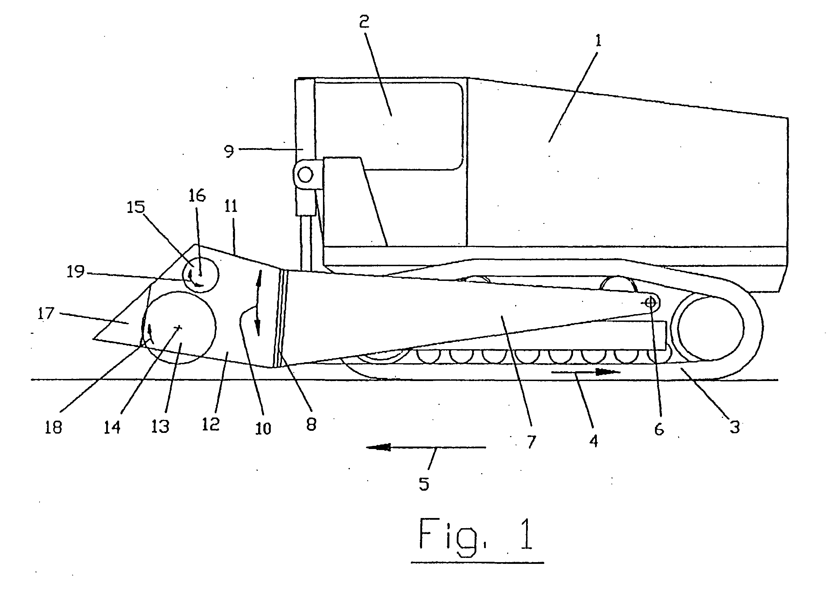

Aus Figur 1 ist das Trägerfahrzeug 1 erkennbar, das als Raupenschlepper ausgebildet ist und eine Fahrerkabine 2 umfaßt. Das Trägerfahrzeug 1 verfügt über ein Raupenlaufwerk 3, dessen Abwälzrichtung 4 der Arbeitsbewegungsrichtung 5 entspricht. An dem Laufwerk 3 sind zwei parallel zur Längsachse des Trägerfahrzeuges 1 sich erstreckende Schubarme 7 um eine Schwenkachse 6 verschwenkbar angeordnet. Das vordere Ende der beiden Schubarme 7 ist jeweils mit einer Kupplung 8, beispielsweise in Form von Flanschen versehen. Auf die Schubarme 7 wirkt jeweils eine Hubeinrichtung 9, beispielsweise in Form eines Hydraulikzylinders ein, um die Schubarme 7 um die Schwenkachse 6 entsprechend dem Pfeil 10 nach oben oder unten bewegen zu können. An die Schubarme 7 bzw. deren Kupplung 8 ist ein Fräskopf 11 angeschlossen, der ein Gehäuse 12 umfaßt, in dem die Fräswalze 13, die um die Drehachse 14 drehbar ist, und eine Mischwalze 15, die um die Drehwalze 16 drehbar ist, aufgenommen sind. Die Drehrichtung der Fräswalze 13 ist durch den Pfeil 18 gekennzeichnet. Es ist erkennbar, daß diese in Arbeitsbewegungsrichtung 5 der Abwälzrichtung 4 entgegengerichtet ist. Die Drehrichtung 19 der Mischwalze 15 ist im Verhältnis zur Drehrichtung 18 der Fräswalze 13 vorgebbar und bevorzugt der Fräswalze 13 entgegengerichtet und kann gleichgerichtet rotieren, um Verstopfungen rückgängig zu machen oder leichtes Gut hinter der Fräswalze 13 zuzumischen. Den beiden Seitenwänden 21 des Gehäuses 12, die parallel zu den Schubarmen 7 verlaufen, sind Leitschare 17 zugeordnet, die vor der Fräswalze 13 in Arbeitsbewegungsrichtung 5 angeordnet sind. In der Figur 1 ist der Fräskopf 11 außer Eingriff zum Boden 20 dargestellt. Mittels der Hubeinrichtung 9 kann der Fräskopf in bzw. außer Eingriff zum Boden 20 gebracht werden.

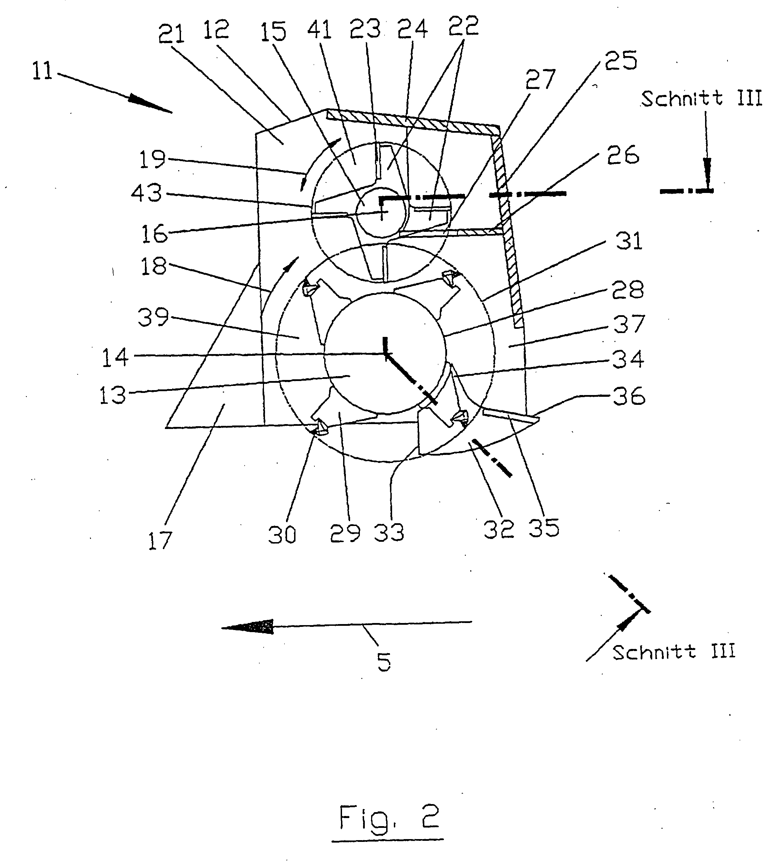

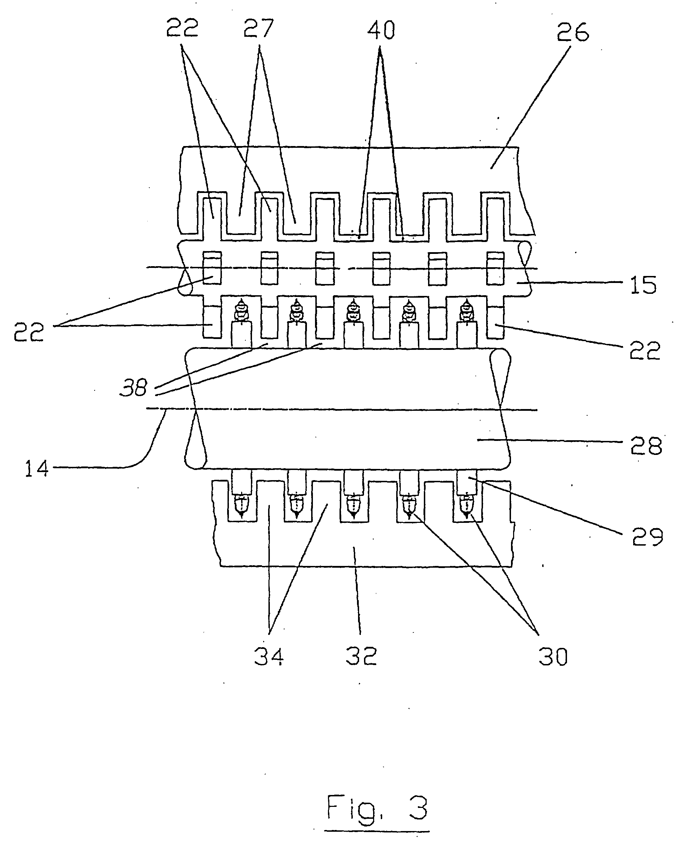

Figur 2 zeigt einen Querschnitt des Fräskopfes 11. Figur 3 zeigt einen Längenabschnitt des Fräskopfes 11 zwischen den beiden Seitenwänden 21. Bei der nachfolgenden Beschreibung wird auf beide Figuren 2 und 3 gleichzeitig eingegangen.

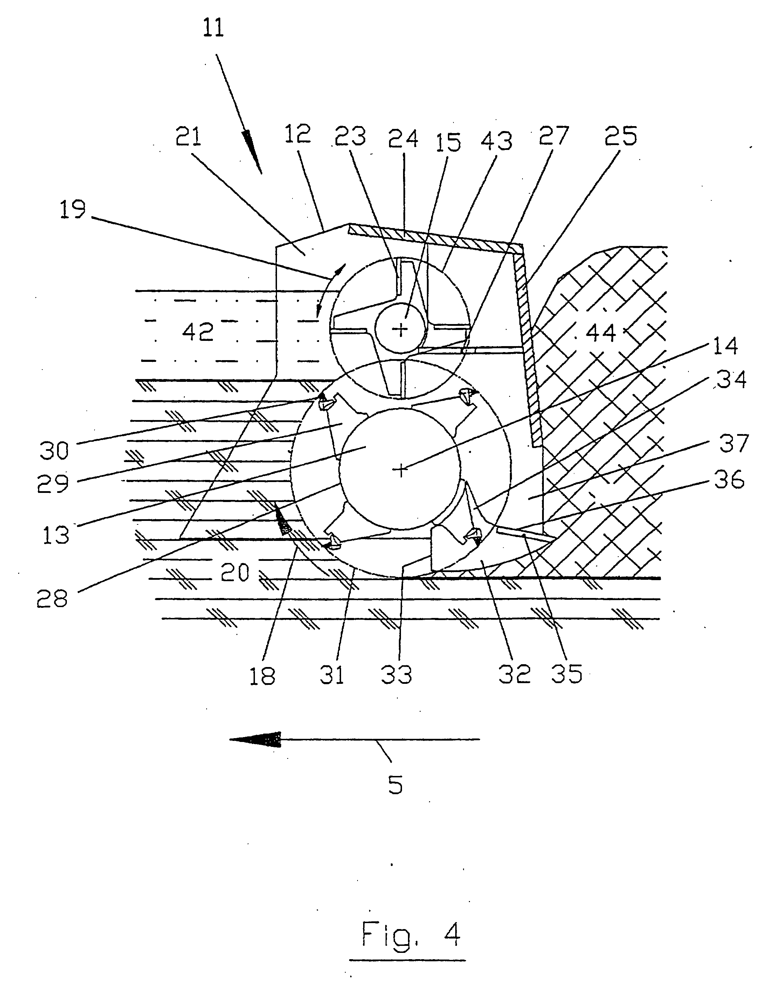

Die Fräswalze 13 ist in den beiden Seitenwänden 21 des Gehäuses 12 drehbar gelagert. Die Fräswalze 13 weist einen Mantel 28 auf, auf dessen Umfang in beabstandeten Radialebenen Fräswerkzeuge 30 mittels Haltern 29 verteilt angebracht sind, so daß sich Umfangslücken 39 ergeben. In Arbeitsbewegungsrichtung 5 wird im Arbeitseinsatz die Fräswalze 13 im Uhrzeigersinne um die Drehachse 14 entsprechend dem Pfeil 18 angetrieben. Aus Figur 3 ist erkennbar, daß die Fräswerkzeuge 30 in mehreren zueinander parallelen Radialebenen bezüglich der Drehachse 14 an dem Mantel 28 angebracht sind, so daß zwischen ihnen jeweils Längslücken 38 entstehen. In diese Längslücken 38 greifen die Mischarme 22 einer oberhalb der Drehachse 14 der Fräswalze 13 angeordneten Mischwalze 15 ein. Bei dem dargestellten Ausführungsbeispiel weist die Mischwalze 15 ebenfalls einen Mantel auf, von dem die Mischarme 22 vorstehen. Beim Ausführungsbeispiel sind insgesamt vier Mischarme 22 jeweils in einer Radialebene angeordnet. Es sind mehrere parallel angeordnete Ebenen vorgesehen, in denen die Mischarme 22 angeordnet sind, und zwar dergestalt, daß die Mischarme 22 die Längslücken 38 zwischen jeweils zwei entlang der Drehachse 14 angeordneten Fräswerkzeugen 30 passieren können. Die Mischarme 22 sind mit Verschleißplatten 23 versehen, die den zu bearbeitenden Boden beaufschlagen, können jedoch mit anderen Werkzeugen versehen werden und eine andere Form aufweisen. Die Mischwalze 15 rotiert in einem Drehsinn 19, der im Verhältnis zum Drehsinn 18 der Fräswalze 13 vorgebbar und vom Einsatzfall abhängig ist. Vorzugsweise rotiert die Mischwalze 15 schneller als die Fräswalze 13. Der obere Bereich, das heißt der Bereich über der Mischwalze 15, wird durch die Decke 24 des Gehäuses 12 abgedeckt. Des weiteren wird der in Arbeitsbewegungsrichtung 5 hinter der Mischwalze 15 liegende Bereich durch die Rückwand 25 des Gehäuses 12 abgedeckt. Der Mischwalze 15 ist eine Kämmvorrichtung 26 zugeordnet, die an Bestandteilen des Gehäuses 12 befestigt ist und welche Zähne 27 aufweist, die in die Längslücken 40 zwischen jeweils zwei entlang der Drehachse 16 beabstandete Mischarme 22 eingreifen, so daß von der Mischwalze 15 nach hinten, das heißt entgegen der Arbeitsbewegungsrichtung 5 gefördertes Bodenmaterial nicht wieder nach oben gelangen kann, sondern abgestreift wird und so in den Arbeitsbereich der Fräswerkzeuge 30 zurückgeführt wird, damit diese das Gut nach unten in Richtung auf den Auslaß 37 fördern können, der zwischen einem Teil der Rückwand 25, die über die Kämmvorrichtung 26 nach unten fortgeführt ist und auch einen Teil des hinteren Bereiches der Fräswalze 13 abdeckt, und einer Leitvorrichtung 35, die Bestandteil einer weiteren Kämmvorrichtung 32 ist, geführt wird. Die Kämmvorrichtung 32 ist der Fräswalze 13 zugeordnet und sorgt dafür, daß das aufgenommene Bodenmaterial nicht nochmals umläuft, sondern den Auslaß 37 passieren muß. Die Kämmvorrichtung 32 umfaßt Zähne 34, die in die Längslücken 38 zwischen zwei Radialebenen, die Fräswerkzeuge 30 enthalten und entlang der Drehachse 14 angeordnet sind, eingreifen. Die Leitvorrichtung 35 besitzt eine Leitfläche 36, die den Auslaß 37 nach unten begrenzt. Darüber hinaus bilden die Zähne 34 Rückhalteflächen 33, die beim Vorschub des Gerätes dafür Sorge tragen, daß der Boden nicht nach rückwärts unmittelbar in die Fräsfurche gelangen kann, sondern den daneben liegenden Fräswerkzeugen 32 zugeleitet und von diesen aufgenommen und nach oben in Richtung auf die Mischwalze 15 gefördert wird. Das von den Fräswerkzeugen 30 aufgenommene Gut wird also im Bereich der Mischwalze 15 umgeleitet und muß die Längslücken 38 infolge Beaufschlagung durch die Mischarme 22 passieren. Neben einer Lockerung des so zu bearbeitenden Bodens ist aber auch eine Mischung mit Zuschlagstoffen möglich, wie dies aus der Zeichnungsfigur 4 hervorgeht. In Figur 4 ist der Fräskopf 11 im Eingriff zum Boden 20 dargestellt, wobei eine Schicht 42, die Zuschlagstoffe beinhaltet, auf dem Boden 20 aufgebracht wurde und diese Schicht 42 mit dem Boden durchgemischt werden soll.

wird, ist bei dem Arbeitseinsatz gemäß Figur 4 fast gänzlich in der Bodenschicht 20 angeordnet. Die Fräswalze 13 rotiert im Uhrzeigersinn gemäß Pfeil 18, während sich das nicht dargestellte Trägerfahrzeug in Pfeilrichtung 5 als Arbeitsbewegungsrichtung bewegt. Das aufgenommene Bodenmaterial wird nach oben in Richtung auf die Mischwalze 15, die zu einem Teil mit ihrem Rotationskreis 43 in den Bereich der Bodenschicht einerseits, im wesentlichen jedoch in der Schicht 42 aus Zuschlagstoffen andererseits eingedrungen ist. Diese Stellung nimmt der Fräskopf 11 durch Absenkung der Schubarme des Trägerfahrzeuges mittels der Hubeinrichtung ein. Er wird über diese im Boden gehalten. Der Einfachheit und Übersichtlichkeit halber sind in Figur 4 nur die Bodenschichten dargestellt, nicht jedoch der Fluß des Materiales bei der Rotation der Fräswalze 13 und der Mischwalze 15. Das von den Fräswerkzeugen 30 nach oben in Richtung auf die Mischwalze 15 geförderte Material wird mit dem von den Mischarmen 22 der Mischwalze 15, die in einer Drehrichtung 19 ro-tiert, die der Fräswalze 13 entgegengerichtet ist, in Richtung auf das von der Fräswalze 13 von der Bodenschicht 20 aufgenommene Material gefördert. Die Bestandteile beider Schichten 20 und 42 werden dabei durchmischt und weiter gelockert und so nach hinten in dem Gehäuse zu dem Auslaß 37 gefördert, so daß hinter dem Fräskopf 11 eine Bodenschicht 44 gebildet ist, die aus Bestandteilen, die vorher den Schichten 20 und 42 zugehörig waren, besteht.

## Patentansprüche

1. Vorrichtung zur Bearbeitung von Böden mit einem Trägerfahrzeug (1), insbesondere Raupenschlepper, mit zwei parallel zueinander angeordneten Schubarmen, die mit einem Ende am Trägerfahrzeug (1) um eine quer zu dessen Längsachse verlaufende Querachse (6) zur Höhenverstellung verschwenkbar angebracht sind und die eine Fräswalze (13) tragen, welche zwischen den freien Enden der Schubarme (7) vor dem Trägerfahrzeug (1) angebracht ist und beim Arbeitseinsatz mit einer Drehrichtung (18) antreibbar ist, die der Abwälzrichtung (4) der Laufelemente (3), auf denen das Trägerfahrzeug (1) bewegbar ist, entgegengerichtet ist, wobei Fräswerkzeuge (30) entlang der Drehachse (14) und auf dem Umfang der Fräswalze (13) verteilt angeordnet sind und diese mittels eines auf die Schubarme (7) einwirkenden Stellantriebes (9) zum Eingriff in den zu bearbeitenden Boden überführbar oder aus diesem aushebbar sind,
**dadurch gekennzeichnet,**
**daß** der Fräswalze (13) eine Mischwalze (15) zugeordnet ist, daß die Drehachse (16) der Mischwalze (15) parallel zur Drehachse (14) der Fräswalze (13) verläuft und oberhalb der Drehachse (14) der Fräswalze (13) angeordnet ist, daß die Mischwalze (15) um ihre Drehachse (16) umfangsverteilte Mischarme (22) aufweist, die in Lücken (38, 39) entlang der Drehachse (14) zwischen jeweils zwei an der Fräswalze (13) angebrachte Werkzeuge (30) eingreifen, und daß die Mischwalze (15) in beide Drehrichtungen antreibbar ist.

2. Vorrichtung nach Anspruch 1,
**dadurch gekennzeichnet,**
**daß** die Mischarme (22) Bestandteil von sternartig ausgebildeten Scheiben sind oder sternartig vom Umfang eines Walzenkörpers vorstehen.

3. Vorrichtung nach einem der Ansprüche 1 oder 2,
**dadurch gekennzeichnet,**
**daß** die Mischarme (22) in die Längslücken (38) und/oder die Umfangslücken (39) jeweils zwischen zwei entlang der bzw. um die Drehachse (14) der Fräswalze (13) verteilten Fräswerkzeuge (30) eingreifen.

4. Vorrichtung nach Anspruch 1,
**dadurch gekennzeichnet,**
**daß** die zur Drehachse (16) der Mischwalze (15) auf Umfangsabstand verteilt angeordneten Mischarme (22) sich über die gesamte Länge der Fräswalze (13) erstrecken und sowohl in die Umfangslücken (39) als auch die Längslücken (38) zwischen jeweils zwei auf dem Umfang als auch entlang der Drehachse (14) der Fräswalze (13) verteilten Fräswerkzeugen eingreifen.

5. Vorrichtung nach einem der Ansprüche 1 bis 4,
**dadurch gekennzeichnet,**
**daß** die Mischwalze (15) schneller rotiert als die Fräswalze (13).

6. Vorrichtung nach einem der Ansprüche 1 bis 3,
**dadurch gekennzeichnet,**
**daß** der Mischwalze (15) eine Kämmvorrichtung (26) zugeordnet ist, welche Zähne (27) aufweist, die in die Längslücken (40) zwischen jeweils zwei entlang der Drehachse (16) angeordnete Mischarme (22) eingreifen.

7. Vorrichtung nach einem der Ansprüche 1 bis 6,
**dadurch gekennzeichnet,**
**daß** der Fräswalze (13) eine Kämmvorrichtung (32) zugeordnet ist, welche Zähne (34) aufweist, die in die Längslücken (38) zwischen jeweils zwei entlang der Drehachse (14) angeordnete Fräswerkzeuge (30) eingreifen.

8. Vorrichtung nach Anspruch 7,
**dadurch gekennzeichnet,**
**daß** der Kämmvorrichtung (32) eine Leitvorrichtung (35) zugeordnet ist.

9. Vorrichtung nach einem der Ansprüche 1 bis 8,
**dadurch gekennzeichnet,**
**daß** die Fräswalze (13) und die Mischwalze (15) in einem zwischen den Schubarmen (6) befestigten Gehäuse (12) angeordnet sind, daß den in Arbeitsbewegungsrichtung (5) hinter sowie oberhalb der Mischwalze (15) liegenden Bereich und bis auf einen hinter der Fräswalze (13) befindlichen Auslaßabschnitt (37) auch den sonstigen hinteren Bereich der Fräswalze (13) abdeckt.

10. Vorrichtung nach Anspruch 9,
**dadurch gekennzeichnet,**
**daß** das Gehäuse (12) Seitenwände (21) aufweist, welche in Arbeitsbewegungsrichtung (5) vorne liegende Leitschare (17) aufweisen.

## Claims

1. Soil working device with a carrier vehicle (1), in particular a crawler-type tractor, with two thrust arms, which are disposed parallel to one another, are attached via one end to the carrier vehicle (1) so as to be pivotable about a transverse axis (6), which extends transversely to the longitudinal axis of the vehicle, for vertical adjustment and bear a tilling roller (13), which is attached between the free ends of the thrust arms (7) in front of the carrier vehicle (1) and upon work commencing can be driven in a direction of rotation (18) which is opposite to the rolling direction (4) of the running elements (3) on which the carrier vehicle (1) can move, wherein tilling implements (30) are distributed along the axis of rotation (14) and over the circumference of the tilling roller (13), and these can be made to engage in the soil which is to be worked or lifted out of the latter by means of an actuating drive (9) acting on the thrust arms (7),
**characterised in**
**that** a mixing roller (15) is associated with the tilling roller (13), that the axis of rotation (16) of the mixing roller (15) extends parallel to the axis of rotation (14) of the tilling roller (13) and is disposed above the axis of rotation (14) of the tilling roller (13), that the mixing roller (15) comprises mixing arms (22) which are distributed over the circumference about its axis of rotation (16) and engage in gaps (38, 39) along the axis of rotation (14) between each two implements (30) attached to the tilling roller (13), and that the mixing roller (15) can be driven in both directions of rotation.

2. Device according to Claim 1,
**characterised in**
**that** the mixing arms (22) constitute a component of star-like discs or project in star-like fashion from the circumference of a roller body.

3. Device according to either of Claims 1 and 2,
**characterised in**
**that** the mixing arms (22) engage in the longitudinal gaps (38) and/or the circumferential gaps (39) between each two implements (30) distributed along or about the axis of rotation (14) of the tilling roller (13).

4. Device according to Claim 1,
**characterised in**
**that** the mixing arms (22) distributed at circumferential spacings relative to the axis of rotation (16) of the mixing roller (15) extend over the entire length of the tilling roller (13) and engage in both the circumferential gaps (39) and the longitudinal gaps (38) between each two tilling implements (30) distributed over the circumference and along the axis of rotation (14) of the tilling roller (13).

5. Device according to any one of Claims 1 to 4,
**characterised in**
**that** the mixing roller (15) rotates faster than the tilling roller (13).

6. Device according to any one of Claims 1 to 3,
**characterised in**
**that** a combing device (26) is associated with the mixing roller (15), which device comprises teeth (27) which engage in the longitudinal gaps (40) between each two mixing arms (22) disposed along the axis of rotation (16).

7. Device according to any one of Claims 1 to 6,
**characterised in**
**that** a combing device (32) is associated with the tilling roller (13), which device comprises teeth (34) which engage in the longitudinal gaps (38) between each two tilling implements (30) disposed along the axis of rotation (14).

8. Device according to Claim 7,
**characterised in**
**that** a guide device (35) is associated with the combing device (32).

9. Device according to any one of Claims 1 to 8,
**characterised in**
**that** the tilling roller (13) and the mixing roller (15) are disposed in a housing (12) which is secured between the thrust arms (6) and which covers the region lying behind and above the mixing roller (15) in the direction of working movement (5) and, apart from an outlet section (37) located behind the tilling roller (13), also the other rear region of the tilling roller (13).

10. Device according to Claim 9,
**characterised in that** the housing (12) comprises side walls (21) which comprise guide blades (17) lying in front in the direction of working movement (5).

## Revendications

1. Dispositif pour la travail du sol avec un véhicule porteur (1), en particulier un tracteur à chenilles, avec deux bras de cisaillement disposés parallèlement l'un par rapport à l'autre, qui sont introduits de manière à pouvoir effectuer un balayage horizontal, avec une extrémité sur le véhicule porteur (1) pour un axe transversal (6) décentré transversalement par rapport à son axe longitudinal pour un déplacement vertical, et qui portent une fraise oscillante (13), laquelle est interposée entre les deux extrémités libres des bras de cisaillement (7), devant le véhicule porteur (1) et qui peut être actionnée lors d'une utilisation de main d'oeuvre, avec un sens de rotation (18) qui est l'inverse du sens de la développante (4) de l'élément de roulement (3) sur lequel le véhicule porteur (1) peut être déplacé, où des outils de fraisage (30) sont disposés et répartis le long d'un axe de rotation (14) et sur la circonférence de la fraise oscillante (13) et ceux-ci peuvent être transportés au moyen d'un organe correcteur (9) agissant sur les bras de cisaillement (7) pour être engagés dans le sol à travailler ou soulevés de celui-ci, **caractérisé en ce que** la fraise oscillante (13) est rattachée à un mélangeur à cylindre (15), **en ce que** l'axe de rotation (16) du mélangeur à cylindres (15) est parallèle à l'axe de rotation (14) de la fraise oscillante (13) et est placé au-dessus de l'axe de rotation (14) de la fraise oscillante (13), **en ce que** le mélangeur à cylindres (15) présente des bras de mélange (22), répartis sur la circonférence autour de son axe de rotation (16), lesquels bras s'engagent dans les failles (38, 39) le long de l'axe de rotation (14), entre chaque fois, deux outils (30) disposés sur la fraise oscillante (13) et **en ce que** le mélangeur à cylindres (15) peut être actionné dans les deux sens de rotation.

2. Dispositif suivant la revendication 1, **caractérisé en ce que** les bras de mélange (22) sont les constituants de disques en étoile ou dépassent en étoile, la circonférence d'un noyau de cylindre.

3. Dispositif suivant l'une quelconque des revendications 1 ou 2, **caractérisé en ce que** les bras de mélange (22) s'engagent dans les failles longitudinales (38) et/ou les failles périphériques (39), chaque fois entre deux outils de fraisage (30) répartis le long de ou sur l'axe de rotation (14) de la fraise oscillante (13).

4. Dispositif suivant la revendication 1, **caractérisé en ce que** les bras de mélange (22) disposés sur l'axe de rotation (16) du mélangeur à cylindres (15), répartis à distance périphérique, s'étendent sur toute la longueur de la fraise oscillante (13) et s'engagent non seulement dans les failles périphériques (39), mais également dans les failles longitudinales (38), entre chaque fois deux outils de fraisage (30) répartis sur la circonférence, mais également le long de l'axe de rotation (14) de la fraise oscillante (13).

5. Dispositif suivant l'une quelconque des revendications 1 à 4, **caractérisé en ce que** le mélangeur à cylindres (15) tourne plus vite que la fraise oscillante (13).

6. Dispositif suivant l'une quelconque des revendications 1 à 3, **caractérisé en ce que** le mélangeur à cylindres (15) est rattaché à un dispositif à dents (26), lequel présente des dents (27) qui s'engagent dans les failles longitudinales (40) entre chaque fois deux bras mélangeurs (22) disposés le long de l'axe de rotation (16).

7. Dispositif suivant l'une quelconque des revendications 1 à 6, **caractérisé en ce que** la fraise oscillante (13) est rattachée à un dispositif à dents (32), lequel présente des dents (34) qui s'engagent dans les failles longitudinales (38) entre chaque fois deux outils de fraisage (30) disposés le long de l'axe de rotation (14).

8. Dispositif suivant la revendication 7, **caractérisé en ce que** le dispositif à dents (32) est rattaché à un dispositif de guidage (35).

9. Dispositif suivant l'une quelconque des revendications 1 à 8, **caractérisé en ce que** la fraise oscillante (13) et le mélangeur à cylindres (15) sont disposés dans un boîtier (12) fixé entre les bras de cisaillement (6), **en ce que** le domaine situé dans le sens du mouvement (5), derrière ainsi qu'au-dessus du mélangeur à cylindres (15) et le domaine jusqu'à une section de déversement (37) se trouvant derrière la fraise oscillante (13) recouvre également le domaine arrière de la fraise oscillante (13).

10. Dispositif suivant la revendication 9, **caractérisé en ce que** le boîtier (12) présente des parois latérales (21) qui présentent dans le sens du mouvement (5), des lames conductrices (17) situées à l'avant.
